# EUROPEAN PATENT APPLICATION

(11) **EP 3 494 860 A1**
(43) Date of publication of application: **12.06.2019**
(21) Application number: 18210457.0
(22) Date of filing: 05.12.2018
(51) Int. Cl.: A47L 15/42, C02F 1/42

(54) **CONTROL SYSTEM FOR A HOUSEHOLD APPLIANCE, WATER TREATMENT SYSTEM CONTROLLED BY THE SYSTEM AND RELATED PROGRAM AND METHOD**

(30) Priority: 06.12.2017 IT 201700140821
(71) Applicant: BITRON S.p.A., 10122 Torino (IT)
(72) Inventor: BRIGNONE, Enzo, 12025 Dronero (CN) (IT)
(74) Representative: Boario, Enrico

(57) **Abstract**

Control system (8) for a household appliance (1), at least adapted to control a water treatment system (2), the latter comprising ion-exchange resins.

The control system (8) being adapted to establish different hardness levels of water to be used in said household appliance (1) and, for each established hardness level, when it is necessary to carry out a procedure for regenerating the resins of the system (2).

The control system (8) comprising: at least one storage medium (82) containing information and data about the management and control of the system (2); and at least one processing unit (81) adapted to process the data contained in said storage medium (82), for the purpose of appropriately controlling the system (2) so as to be able to change the hardness of the water to be used in said household appliance (1) and conveniently request the execution of a procedure for regenerating the resins of said system (2).

The storage medium (82) is adapted to allocate memory for at least two threshold values for each hardness level established by the control system (8).

Said at least two threshold values corresponding to as many water quantities to be supplied to the system (2), whereupon it is necessary to supply a suitable quantity of a regeneration liquid or fluid in contact with said ion-exchange resins of said system (2).

## Description

The present invention relates to a control system for a household appliance. Said control system is adapted to, among other things, drive and control a water treatment system comprising a decalcification system, in order to treat the water entering a household appliance such as, for example, a dishwasher or a washing machine, so as to obtain water to be supplied to the household appliance, e.g. into a wash tub thereof, which has a predetermined and/or substantially constant hardness. The present invention further relates to a computer program adapted to be executed by the control system and to a method for controlling the water treatment system.

Decalcification systems are known which comprise ion-exchange resins. All systems currently associated with household appliances, such as dishwashers and/or washing machines, require the regeneration of such ion-exchange resins. The resin regeneration phase is carried out by immersing the resins into an aqueous solution of sodium chloride, at regular intervals, particularly after a predetermined number of work cycles of the household appliance, corresponding to a number of litres of water that have been supplied to the water treatment system. It is also known that, in a dishwasher, in order to attain the best washing results, it is necessary that the hardness of the water supplied into the wash tub remains within the range of 3÷11°f (French degrees), corresponding to soft and/or medium-hard water. With such water hardness values, one can be certain that a good cleaning effect will be obtained without damaging the crockery.

It is also known that, in order to achieve optimal cleaning and shining results, it would be appropriate to use water having different levels of hardness during the different operating phases of the dishwasher, e.g. washing and rinsing.

In currently known solutions, the instant of execution of the resin regeneration process may be delegated to a sensor suitably connected to the control system of the household appliance, the latter being adapted to conveniently activate one or more actuators in order to execute the resin regeneration process, or the process may be carried out after a certain quantity of water has been supplied into the water treatment system, as counted by the control system included in the dishwasher. In general, the control system is programmed in such a way that, based on the hardness level set at the time of installation, it will compute the quantity of water that must have been supplied into water treatment system 2 before the execution of the resin regeneration process.

The use of a sensor, e.g. a hardness sensor, through which it is possible to determine the resins' exhaustion degree, allows for a very accurate determination of the instant when the resins should be regenerated. However, this solution is rather costly.

The use of the control system, which, when appropriately programmed, will execute a resin regeneration procedure after a predetermined number of work cycles and/or litres of water supplied into the water treatment system, suffers from the drawback that this programming only occurs at the time of installation of the appliance, based on the hardness of the water in the place of installation and supply, and cannot be corrected and/or updated at a later time. Therefore, though less expensive, this solution cannot be easily adapted to specific requirements.

Currently known solutions do not take into account the exhaustion degree of the resins, which may be new, thus lasting longer, or completely exhausted, should the decalcifier have run out of salt or salt being almost absent in the salt container.

In the former case, this difference in the resins' exhaustion degree results in a longer operating range and a very low hardness level of the water exiting the decalcifier. In the latter case, on the contrary, the operating range will be shorter and the hardness level of the water exiting the decalcifier will be slightly higher.

Solutions are also known wherein a mixing valve is used. Said mixing valve performs the function of, when the water in use has a very low hardness level, causing a percentage of untreated, non-decalcified water to be directly supplied to the household appliance, e.g. into the wash tub, without passing through the tank that contains the resins. The quantity of water to be directly supplied into the wash tub is defined by the control system, e.g. as a function of the hardness value of the input water. Said mixing valve allows for a very accurate definition of the hardness of the water to be supplied into the wash tub. The same valve, however, has very high component and maintenance costs. Therefore, this type of component is actually installed only in certain types of products, particularly in high-end household appliances. This technical solution is described, for example, in German patent DE19512011. This technical solution is disadvantageous in that it requires the presence of a further valve in addition to the valve necessary to allow filling the salt tank to create the regeneration fluid, thus resulting in higher production costs, as previously mentioned.

A technical solution currently known in the art is described in European patent EP1120080. According to this solution, a mechanical system is employed for opening and closing a hole connected in parallel to the resin tank. This solution is functional and relatively inexpensive, but it is disadvantageous because there is still the risk of human error, introduced by the user, in the setting of the mechanical system for opening a by-pass circuit.

Furthermore, document WO2006/079500 A1 discloses a method for controlling and managing the water flow towards a coffee-making machine comprising an ion-exchange water treatment system.

The solution according to the present invention aims at solving all the problems suffered by the prior art by means of a low-cost solution that ensures good optimization of water use and consumption for the regeneration of the resins and for obtaining the desired hardness of the water exiting the water treatment system.

It is one object of the present invention to provide a control system capable of controlling, among other things, a water treatment system having a decalcification system, which can automatically change both the thresholds at which regeneration liquid or fluid needs to be supplied and put in contact with said resins and the quantity of water to be used for producing the resin regeneration fluid, so that the resins will be regenerated appropriately, for the purpose of obtaining, at the exit of the system, water having a predetermined and/or constant hardness value, independently of the hardness of the water entering the system.

One aspect of the present invention relates to a control system for a household appliance having the features set out in the appended claim 1.

Another aspect of the present invention relates to a water treatment system having the features set out in the appended claim 7.

A further aspect of the present invention relates to a dishwasher having the features set out in the appended claim 12.

A further aspect of the present invention relates to a computer program adapted to be executed by a control system and having the features set out in the appended claim 14.

A further aspect of the present invention relates to method for controlling a water treatment system having the features set out in the appended claim 16.

Auxiliary features are set out in respective dependent claims appended hereto.

The features and advantages of the control system, water treatment system, dishwasher, computer program and method will become apparent from the following description of some possible exemplary embodiments of the control system, water treatment system, dishwasher, program and method, as well as from the annexed drawings, wherein:
- Figure 1 shows a block diagram of the control system according to the present invention;
- Figures 2A, 2B and 2C show three possible embodiments of the system in a first operating configuration of water treatment;
- Figures 3A, 3B and 3C show the three possible embodiments of Figures 2A, 2B and 2C in a second operating configuration of regeneration.
- Figure 4 schematically shows a dishwasher comprising the water treatment system according to the present invention.

With reference to the above figures, the household appliance, e.g. a dishwasher, is designated as a whole by reference numeral 1.

The control system for a household appliance, according to the present invention, is designated as a whole by reference numeral 8; the water treatment system controlled by said control system 8 is designated as a whole by reference numeral 2.

Control system 8 is particularly suitable to be applied to a household appliance 1, e.g. a dishwasher.

Said control system 8 is at least adapted to control a water treatment system 2, the latter comprising ion-exchange resins.

Preferably, said control system 8 is implemented on the electronic main board adapted to manage and control household appliance 1 and the systems, circuits and/or devices comprised in household appliance 1, such as, for example, water treatment system 2.

In general, said control system 8 is adapted to establish different hardness levels of water to be used in said household appliance 1. In fact, the control system is adapted to establish the hardness level of the water to be used in said household appliance 1 on the basis of the different operating configurations of household appliance 1, independently of the hardness level of the available water, e.g. water coming from a water supply network, e.g. a domestic one.

For each established hardness level, said control system 8 is adapted to establish when it is necessary to carry out a procedure for regenerating the ion-exchange resins of said system 2.

Control system 8 according to the present invention comprises: at least one storage medium 82 containing information and data about the management and control of water treatment system 2; and at least one processing unit 81. Said processing unit 81 is adapted to process the data contained in said storage medium 82, for the purpose of appropriately controlling water treatment system 2 so as to be able to change the hardness of the water to be used in said household appliance 1. Moreover, the processing of the data contained in said storage medium 82 by processing unit 81 conveniently allows requesting the execution of a procedure for regenerating the ion-exchange resins of said water treatment system 2 in order to regenerate said ion-exchange resins.

Said storage medium 82 is adapted to allocate memory for at least two threshold values for each hardness level established by control system 8. Said at least two threshold values correspond to as many water quantities to be supplied to water treatment system 2, whereupon it is necessary to supply a suitable quantity of a regeneration liquid or fluid in contact with said resins of said water treatment system 2. The present solution thus allows changing, as a function of the conditions in which water treatment system 2 and/or household appliance 1 is operating, the threshold values whereupon a suitable quantity of regeneration liquid or fluid needs to be placed in contact with said resins. The present solution makes it possible to solve the above-mentioned technical problems suffered by the prior art in a simple and intuitive manner.

In one possible exemplary, but non-limiting, embodiment, a first threshold value is such to be implemented by control system 8 upon the first use of water treatment system 2. On such occasion, in fact, the resins have the highest decalcifying power and a very long service life prior to exhaustion, so that water treatment system 2 will be able to treat a greater quantity of water and the resin regeneration procedure can be deferred.

Preferably, a second threshold value is such to be implemented by control system 8 after the supply of an appropriate quantity of regeneration liquid or fluid for the execution of the first procedure for regenerating the resins of water treatment system 2. It is well known that, in order to prevent part of the regeneration fluid from flowing out of the water treatment system, the quantity of regeneration fluid is always smaller than the maximum quantity allowed, and therefore a part of the resins, although small, will not be completely regenerated, resulting in lower overall performance. In light of this, it is appropriate to set a second threshold value, different from the first threshold value. Preferably, said second threshold value corresponds to a smaller quantity of water, compared to said first threshold value.

In one possible exemplary, but non-limiting, embodiment, a third threshold value is allocated in said storage medium 82. Said third threshold value is such to be implemented by control system 8 if said first resin regeneration procedure has been carried out; and said control system 8 detects the activation of a salt presence sensor 64 in a salt tank 6 adapted to contain salts.

Said salt presence sensor 64 is adapted to be activated when the quantity of salt contained in tank 6 is below a predetermined threshold, e.g. the threshold that turns on a warning lamp comprised in household appliance 1, indicating the absence of salt in the second tank 6. Preferably, said third threshold value corresponds to a smaller quantity of water, compared to said first threshold value and said second threshold value.

In one possible exemplary, but non-limiting, embodiment, a fourth threshold value is allocated in said storage medium 82. Said fourth threshold value is such to be implemented by control system 8 when it is necessary to reach a hardness level of the water to be used in said household appliance 1 that has been established by control system 8. In particular, according to the different operating configurations of household appliance 1, it is possible to control water treatment system 2 appropriately in order to change the hardness of the water exiting the same system 2, to be then used in said household appliance 1, by supplying a suitable quantity of regeneration liquid or fluid in contact with the resins. In particular, in the case of a dishwasher, the fourth threshold value allows supplying a suitable quantity of regeneration liquid or fluid in contact with the resins in order that, after the machine has been in the washing configuration, the water that will be supplied into a wash tub 12 in the rinsing configuration will have a different hardness level than the water that was supplied into the same wash tub 12 in the washing configuration.

In one possible embodiment, control system 8 is adapted to control water treatment system 2 in a manner such that a predetermined quantity of regeneration fluid, in particular a small quantity thereof, is placed in contact with said resins for the purpose of increasing the hardness level of water to be used in said household appliance 1. In the condition wherein the water coming from the mains has a low hardness level, it is possible to supply a quantity of regeneration fluid in order to increase the hardness of the water directed towards household appliance 1. Such regeneration fluid will not be used in order to regenerate the resins, but to increase the hardness of the water directed towards household appliance 1. In this way it is possible to increase the hardness of the water as required, by supplying water having the desired hardness into wash tub 12 of a household appliance 1.

By implementing a rather simple water treatment system, the present solution makes it possible to appropriately control water treatment system 2, thus solving, at a low cost, all the technical problems suffered by the prior art.

The present solution provides all of the above-mentioned technical effects by controlling a water treatment system 2 dynamically, instead of using complex and expensive water treatment systems.

One possible embodiment of system 2 according to the present invention comprises: a supply line 21, through which a fluid, in particular water, is supplied into system 2, e.g. water from the water supply network, having a predetermined first hardness level, and a decalcification system 4.

For the purposes of the present description, the term water will hereafter be used for simplicity's sake, while the previously defined generalization will still apply.

Decalcification system 4 in turn comprises: at least one first tank 5, adapted for containing ion-exchange resins; at least one second tank 6, adapted for containing salts, such as, for example, sodium chloride, useful for obtaining the regeneration fluid. Decalcification system 4 comprises also a first circuit 41 adapted for conducting water coming from supply line 21 towards an inlet of said first tank 5, preferably a first inlet 51; and a second circuit 43, adapted for conducting water, e.g. coming from supply line 21 and/or from the first tank 5, towards an inlet 61 of the second tank 6.

System 2 according to the present invention further comprises an outlet line 22 connected to an outlet 52 of the first tank 5, through which water having a second hardness value flows out of system 2. Said second hardness value lies within a range of values of 3÷11°f.

System 2 is adapted to be controlled by control system 8 according to the present invention, which is adapted to manage and control said system 2.

Said control system 8 is at least adapted to control at least one electromechanical actuator.

In system 2 according to the present invention, said at least one electromechanical actuator is adapted to define, at least partly, the quantity of water per time unit supplied into said second circuit 43 and/or into said second tank 6. In a preferred embodiment, said electromechanical actuator is adapted to define, at least partly, the quantity of regeneration fluid supplied into said first tank 5.

In this way, as a function of the passing of time, it is possible to determine the quantity of water to be directed towards said second circuit 43 and/or said second tank 6. In particular, by determining the quantity of water to be directed towards said second circuit 43 and/or said second tank 6, it is possible to determine the quantity of regeneration fluid to be introduced into said first tank 5, and/or vice versa, thus being able to determine the degree of regeneration of the resins contained therein.

System 2 is adapted to be controlled by control system 8 according to the present invention.

In general, control system 8 is adapted to control at least one electromechanical actuator comprised in system 2. The control system is also adapted to automatically determine a time of activation of said at least one electromechanical actuator. In fact, by automatically determining the time of activation of at least one electromechanical actuator during the operating configuration of regeneration of system 2, it is possible to obtain, in the operating configuration of water treatment of system 2, water flowing in said outlet line 22 that will have a preset second hardness value, independently of said first hardness value of the water entering system 2, e.g. measured in supply line 21, or a different value as a function of the different operating configurations of household appliance 1, e.g. a dishwasher. This is made possible by the fact that the decalcifying power of the resins will be adapted according to the hardness value of the water entering supply line 21 and/or the intended use of the treated water in household appliance 1. Moreover, water treatment system 2 according to the present invention, conveniently activated by control system 8, allows introducing a small quantity of regeneration fluid in order to increase the hardness of the water directed towards household appliance 1, e.g. in case of soft water.

In one possible exemplary, but non-limiting, embodiment, said system 2 comprises at least one sensor, e.g. a measurement device 25, adapted to determine the first hardness value of the water entering said supply line 21. This embodiment is more automated. In an alternative embodiment, the hardness value is measured prior to the installation of system 2, e.g. by an operator by means of a manual device, and the value thus determined is suitably stored into the non-volatile storage medium 82, to which processing unit 81 of control system 8 can gain access in order to use such datum for appropriately controlling system 2.

By automatically controlling the time of activation of one or more electromechanical devices comprised in system 2, control system 8 according to the present invention allows controlling system 2 in such a way as to obtain water in the outlet line 22 having a constant and/or predetermined hardness level, independently of the hardness value of the water in the supply line of system 2, and/or as a function of the different operating phases of household appliance 1 equipped with control system 8 and system 2. In fact, by automatically adjusting the time of activation of at least one electromechanical device comprised in system 2, it is possible to vary, in an accurate manner, the quantity of water directed towards the second circuit 43 and/or the second tank 6. By varying the quantity of water directed towards said second tank 6, this solution allows changing the production of regeneration fluid. Such regeneration fluid will allow regenerating a quantity of resins comprised in the first tank 5 that will be proportional to the quantity of regeneration fluid produced. The present solution also provides good control over the time required for completing a resin regeneration procedure, even a partial one.

The present solution also results in a reduction of the overall water consumption of household appliance 1. In fact, control system 8 can take into account the quantity of regeneration liquid or fluid introduced into the first tank 5 while evaluating the degree of regeneration/saturation of the resins, and can thus determine whether to postpone or anticipate the complete resin regeneration procedure by appropriately adapting, e.g. recalculating, the threshold values stored in storage medium 82.

In general, system 2 according to the present invention envisages that, in an operating configuration of regeneration, as a function of the first hardness value of the water entering system 2 and/or the number of regeneration procedures carried out, and/or the operating configuration of household appliance 1 with which they are associated, control system 8 is adapted to: automatically determine the time of activation of said at least one electromechanical actuator; and activate said at least one electromechanical actuator for a previously determined time, for the purpose of varying the quantity of water directed towards the second circuit 43 and/or said second tank 6.

In one possible embodiment of system 2 according to the present invention, said electromechanical device is pump 3, wherein variations in the time of activation of the same pump 3 will produce variations in the quantity of water directed towards said second tank 6 and/or said second circuit 43. In particular, the quantity of water directed towards said second tank 6 and/or said second circuit 43 will be proportional to the time of activation of the same pump 3. In this embodiment, by controlling the time of activation of said pump 3, it is possible to control the quantity of water coming from said supply line 21 and/or from the first tank 5 that will have to be delivered into said second circuit 43 and/or into the second tank 6 containing salts with which the resin regeneration fluid will be created. Variations in the quantity of regeneration fluid will produce variations in the quantity of resins, contained in said first tank 5, that will be regenerated. In a preferred embodiment, variations in the time of activation of pump 3 will result in variations in the quantity of regeneration fluid directed towards the first tank 5.

Therefore, the longer the time of activation of the pump 3, the greater the amount of water that will be delivered into said second circuit 43 and/or into the second tank 6, and hence the greater the quantity of regeneration fluid that will be produced, and the greater the quantity of resins that will come in contact with said regeneration fluid. The greater the quantity of resins coming in contact with the regeneration fluid, the greater the quantity of regenerated resins and/or the higher the regeneration level of the same resins. In a preferred embodiment, the longer the time of activation of pump 3, the greater the quantity of regeneration fluid that will be delivered into said first tank 5.

Likewise, the shorter the time of activation of pump 3, the smaller the quantity of resins that will come in contact with said regeneration fluid, and hence the smaller the quantity of regenerated resins and/or the lower the regeneration level of the same resins. In a preferred embodiment, the shorter the time of activation of pump 3, the smaller the quantity of regeneration fluid that will be delivered into the first tank 5.

For the purposes of the present description, the term regeneration level refers to the percentage of completion of the ion exchange process in comparison with the complete regeneration of the ion-exchange resins, for every single granule or particle of resin.

Furthermore, the supply of a quantity, in particular a small quantity, of regeneration fluid into the first tank 5 allows increasing the hardness level of the water directed towards said at least one outlet 52 and flowing out through said outlet line 22 of system 2.

In general, by varying the quantity and/or the level of regenerated resins it will be possible to intervene more or less effectively on the level of treatment, in particular a decalcification treatment, to which the water entering through supply line 21 will be subjected, so that water having a second desired hardness value will be obtained in outlet line 22. Therefore, if the first hardness value of the water entering through supply line 21 is close to the lower end of the optimal hardness range of 3÷11°f, then the quantity of resins that will have to be regenerated will be very small or even null, in that the water may not need to be treated, in particular decalcified, any further. Therefore, the quantity of water delivered towards said second circuit 43 and/or said second tank 6, or the quantity of regeneration fluid delivered into the first tank 5, will be low or null, as opposed to the case wherein the first hardness value of the water entering through supply line 21 is close to the upper end of the previously mentioned optimal hardness range. In this latter case, the quantity of resins that will have to be regenerated will be very high, since all or almost all the resins contained in the first tank 5 will need to be regenerated. In this case, in fact, it will be necessary to treat, in particular decalcify, the water in order to obtain water flowing through said outlet line 22 having a desired second hardness value. In this case, the quantity of water delivered towards said second circuit 43 and/or said second tank 6, or the quantity of regeneration fluid supplied into the first tank 5 will be greater than in the previously described case, because it will be necessary to produce more regeneration fluid to be supplied into said first tank in order to achieve a greater resin regeneration effect. As an alternative, a small quantity of regeneration fluid may be delivered into the first tank 5 in order to increase the hardness value of the water directed towards outlet line 22 of system 2.

In general, control system 8 automatically determines the time of activation of two or more electromechanical actuators, so that variations in the quantity of water directed towards said second circuit and/or said second tank 6 can be produced as a function of said first water hardness value, resulting in lower production costs and less complexity of the system itself.

In a preferred, but non-limiting, embodiment, said pump 3 is arranged in decalcification system 4, and in particular pump 3 is arranged along a line, in particular a second circuit 43, or duct, e.g. a duct 45, that puts said first tank 5 in communication with said second tank 6.

In a further possible embodiment, said electromechanical device 31 is a valve arranged in said second circuit 43, and there is also an accumulation tank 32 for accumulating a known quantity of water to be supplied into said second circuit 43.

Preferably, said valve 31 is adapted to allow water to flow into said second circuit 43, e.g. by allowing the entry of water coming from accumulation tank 32, which will then be directed towards the second tank 6.

In general, proper programming of control system 8, e.g. by means of a computer program adapted to be implemented by the same control system 8, e.g. comprising a processing unit 81 and a storage medium 82, will allow simplifying the hardware structure of system 2, while compensating for the structural limitations of the system - fewer valves - through accurate control of the individual devices comprised in system 2. In this manner, no mechanical interventions by the user will be required on system 2, thus reducing the risks of malfunctions, as previously specified.

System 2 according to the present invention comprises a single outlet line 22, which is only connected to outlet 52 of the first tank 5. This embodiment does not implement any by-pass circuits capable of mixing part of the water treated by decalcification system 4 with other water directly coming from supply line 21, and therefore no mixing valves are necessary.

In a preferred, but non-limiting, embodiment, decalcification system 4 comprises only one first tank 5, which may in turn comprise: at least one inlet 51 for the entry of water to be decalcified; at least one outlet 52 for the exit of the water, in particular decalcified water.

Decalcification system 4 further comprises only one second tank 6, which in turn comprises: an inlet 61 for the entry of water to be used for creating a regeneration fluid; at least one outlet 62 for the exit of the regeneration fluid directed towards said first tank 5. Said at least one outlet 62 of the second tank 6 is in fluidic connection with said first tank 5, e.g. with a second inlet 54 comprised in said first tank 5, through a duct 45.

Preferably, said second tank 6 comprises a filler neck for adding salts into said second tank 6. Said filler neck can be closed by means of a cap 63, accessible to the user from within wash tub 12.

Preferably, said first tank 5 and said second tank 6 are disposed at the same height. Therefore, there is no difference in level between the two tanks.

In a preferred, but non-limiting, embodiment, an outlet of the first tank 5 is fluidically connected to the second tank 6, and in particular to inlet 61, through the second circuit 43.

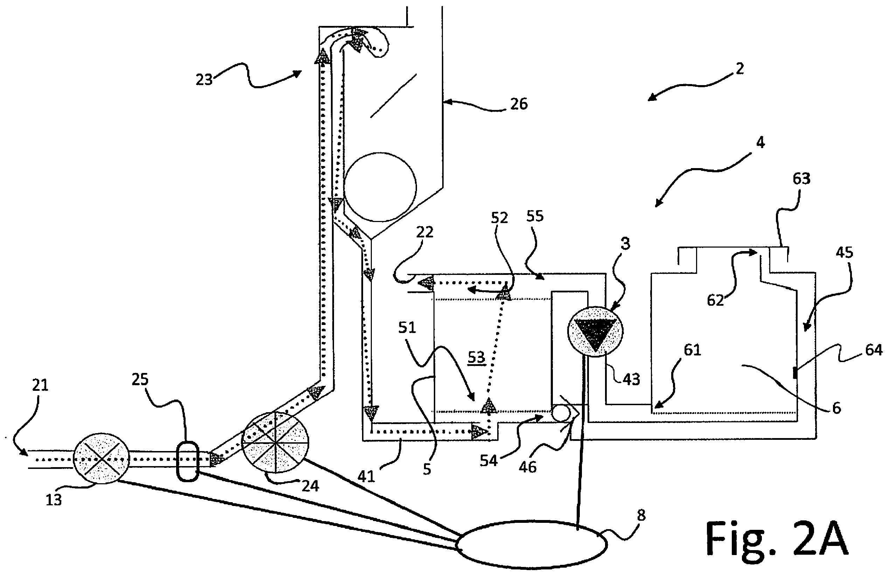

In a first embodiment, e.g. as shown in Figure 2A, said pump 3 is arranged along the second circuit 43 that connects a second outlet 55 of the first tank 5 to inlet 61 of the second tank 6. Preferably, said second outlet 55 of the first tank 5 is located in the top part of the same first tank 5, e.g. substantially at the same height as outlet 52 of the same tank 5. Preferably, said first inlet 51 and said second inlet 54 are located in the bottom part of the first tank 5, so that the water or the regeneration fluid will flow through the resins towards respective outlets (52, 55), which are located in the top portion of the same first tank 5. Moreover, along said duct 45 that connects said at least one outlet 62 of the second tank 6 to the second inlet 54 of the first tank 5 there is a selective shut-off element, e.g. a non-return valve 46, which allows the fluid to flow in one direction only, in particular from said second tank 6 towards said first tank 5, while preventing the fluid from flowing in the opposite direction.

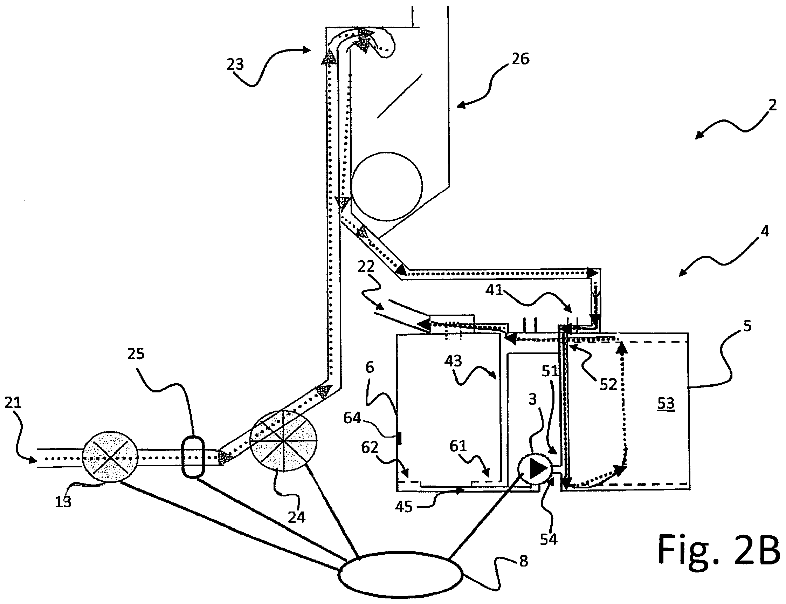

In a second embodiment, e.g. as shown in Figure 2B, said pump 3 is arranged along duct 45 that connects outlet 62 of the first tank 6 to the second inlet 54 of the first tank 5. In this embodiment, pump 3 is adapted to define, at least partly, the quantity of regeneration fluid per time unit to be supplied into said first tank 5.

In the same embodiment, inlet 61 of the second tank 6 is connected to outlet 52 of the first tank 5 through said second circuit 43. Preferably, said first inlet 51 and said second inlet 54 are located in the bottom part of the first tank 5, so that the water or the regeneration fluid will flow through the resins towards outlet 52, the latter being located in the top portion of the same first tank 5.

Unlike the previous embodiment illustrated by way of example in Figure 2A, pump 3 is not arranged along the second circuit 43 connected to inlet 61 of the second tank 6, but is arranged in duct 45 that fluidically connects outlet 62 of the second tank 6 to the second inlet 54 of the first tank 5. Thus, pump 3 can move the regeneration fluid from the second tank 6 towards the first tank 5 in a direct and controlled manner.

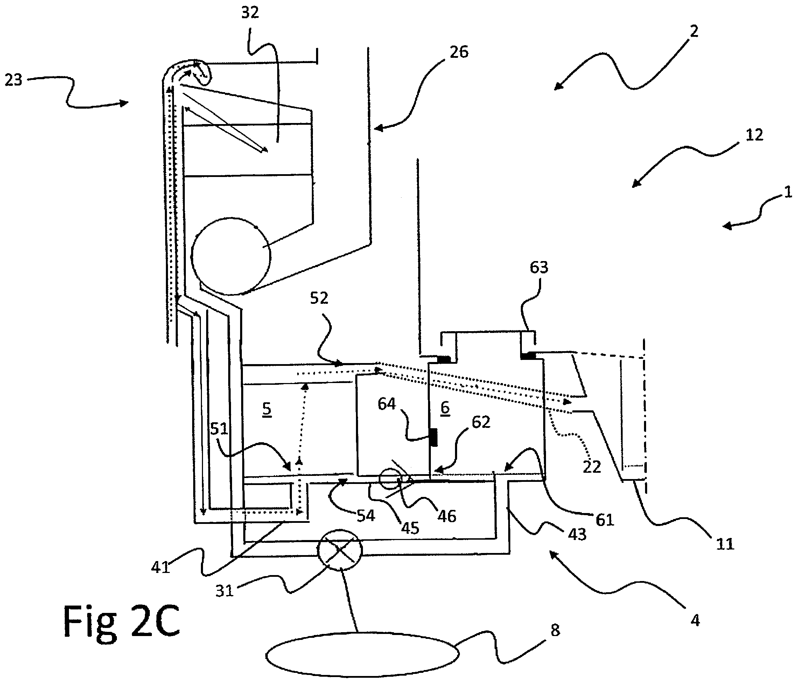

The embodiment shown in Figure 2C includes an accumulation tank 32 and a valve 31. Said accumulation tank 32 is preferably arranged in the structure comprising air break 23 and an air venting element 26. Preferably, said valve 31 is arranged along the second circuit 43, connected to inlet 61 of the second tank 6. Said valve 31 is adapted to be driven and controlled by said control unit 8.

In the preferred, but non-limiting, embodiments shown in Figures 2A and 2B, system 2 can execute the regeneration of the resins contained in the first tank 5 in a closed loop, thereby providing numerous technical advantages, such as, for example, not causing any additional water consumption, since only water already present in the first tank 5 and/or regeneration fluid already present in the second tank 6 is used. This solution allows supplying a known quantity of regeneration fluid into the first tank 5 for the purpose of increasing the hardness of the water directed towards outlet line 22, instead of continuing the resin regeneration process. The present solution avoids the use of any accumulation tanks 32 intended to contain a known quantity of water to be used for generating the regeneration fluid, as shown by way of example in Figure 2C. In conclusion, the present solution allows for the execution of the regeneration phase in any operating and/or working phase of a household appliance 1, e.g. a dishwasher, while reducing the time required for the proper operation of the household appliance.

In general, different embodiments of decalcification system 4 are possible. For example, in one possible embodiment both said inlet 61 and said at least one outlet 62 are located in the bottom part of said second tank 6. Preferably, both the first tank 5 and the second tank 6 are made of plastic material, preferably by means of a co-moulding process. Said two tanks (5,6) may be either made as one piece or manufactured separately and then assembled together.

In general, said system 2 may comprise anti-backflow elements to prevent the water in system 2 to return towards the mains. Preferably, an air-break device 23 is included. More preferably, system 2 also includes an air venting element 26, e.g. a venting hole. Said air-break device 23 is adapted to purify the water by removing the corpuscles in suspension in the liquid, e.g. scale residues.

In one possible exemplary, but non-limiting embodiment, system 2 comprises at least one first measurement device 24, adapted to measure the quantity of water being supplied into system 2. Said first measurement device 24 is, for example, a flowmeter adapted to measure the flow of water circulating in system 2, and is normally used in order to determine the quantity of water that is being supplied into the household appliance 1, e.g. into a wash tub 12 of a dishwasher in the different operating configurations. Said first measurement device 24 is electrically connected to said control system 8, so that, by using the data obtained from a first measurement device 24, control system 8 will be able to calculate the quantity of water that is flowing in at least one portion of system 2 and hence the quantity of water that can flow, per time unit, towards said second circuit 43 and/or said second tank 6, and/or if the threshold values corresponding to as many quantities of water supplied into system 2 have already been reached.

In one possible exemplary, but non-limiting, embodiment, system 2 comprises at least one second measurement device 25, adapted to measure the hardness value of the water supplied into system 2. Said second measurement device 25 is, for example: a resin-based analogue sensor, adapted to perceive the dimensional variation occurring in a granule of resin sensitive to scale concentration; or a sensor capable of measuring the resistivity of the flow of water circulating in system 2. Said second measurement device 25 is electrically connected to said control system 8.

In general, water treatment system 2 comprises an outlet line 22, adapted to connect outlet 52 of the first tank 5 to a fluid intake aperture located within a household appliance 1, e.g. in a wash tub 12 of a dishwasher.

A further aspect of the present invention relates to a dishwasher 1. Dishwasher 1 comprises a wash tub 12, a door 10 adapted to sealingly close said wash tub 12, a sump 11 for water recovery, and at least one supply valve 13, as is known to a person skilled in the art. Dishwasher 1 is therefore particularly suitable for including a water treatment system 2 and/or a control system 8 according to the present invention. The present solution allows supplying a quantity of regeneration liquid or fluid into the first tank 5 and deciding when such operation should be carried out, thanks to control system 8 according to the present invention.

Furthermore, in the embodiments shown in Figures 2A and 2B the regeneration liquid or fluid can be delivered into the first tank 5 both during the wash phase of dishwasher 1 and at the end of a wash cycle of dishwasher 1; in fact, as previously described, the resin regeneration procedure is carried out in a closed-loop condition.

Control system 8 according to the present invention is adapted to execute a computer program for managing and controlling at least one water treatment system 2.

The computer program is adapted to be stored in a storage medium 82 comprised in a control system 8 for a household appliance 1 according to the present invention.

Said program is adapted to be executed by processing unit 81 comprised in control system 8.

Said program provides for the execution of the following steps:
- setting a first threshold value corresponding to a first quantity of water to be supplied into water treatment system 2;
- executing work cycles of household appliance 1 until said first quantity of water has been supplied into water treatment system 2, thus exceeding said first threshold value;
- executing a regeneration procedure in water treatment system 2;
- setting a second threshold value corresponding to a second quantity of water to be supplied into water treatment system 2; wherein said second threshold value is lower than said first threshold value;
- executing work cycles of the household appliance until said second quantity of water has been supplied into water treatment system 2, thus exceeding said second threshold value.

The computer program according to the present invention allows setting the correct threshold value for controlling a system 2.

In this manner, according to specific requirements, it is possible to set the correct threshold values corresponding to as many water quantities to be supplied to water treatment system 2, whereupon it will be necessary to supply a suitable quantity of a regeneration liquid or fluid in contact with said resins of system 2.

In one possible exemplary, but-non limiting, embodiment, the computer program provides for, after a step of executing work cycles of the household appliance until said second quantity of water has been supplied into the water treatment system 2, thus exceeding said first threshold value, if said control system 8 detects the activation of a salt presence sensor 64, executing the following steps:
- setting a third threshold value corresponding to a third quantity of water to be supplied into water treatment system 2; wherein said third threshold value is lower than both said first threshold value and said second threshold value;
- executing work cycles of the household appliance until said third quantity of water has been supplied into water treatment system 2, thus exceeding said third threshold value.

Moreover, if said control system 8 detects the deactivation of a salt presence sensor 64, the following steps will be carried out:
- setting a second threshold value corresponding to a second quantity of water to be supplied into water treatment system 2;
- executing work cycles of the household appliance until said second quantity of water has been supplied into water treatment system 2, thus exceeding said second threshold value.

The present computer program allows changing the threshold value as a function of changes occurring in the conditions in which water treatment system 2 is operating, and in particular in the event that only a small quantity of salt is present in the second tank 6.

In one possible embodiment, the computer program also comprises the steps of:
- computing a quantity of a regeneration liquid or fluid supplied into the first tank 5 containing the resins;
- recalculating the preset threshold value, modifying accordingly the quantity of water to be supplied into water treatment system 2.

Thanks to the processing program, control system 8 can take into account the quantity of regeneration liquid or fluid introduced into the first tank 5 while evaluating the degree of regeneration/saturation of the resins, and can thus determine whether to postpone or anticipate the complete resin regeneration procedure by appropriately adapting, e.g. recalculating, the threshold values stored in storage medium 82.

A further aspect of the present invention relates to a method for controlling a water treatment system 2 for generating a regeneration fluid. Such method is preferably applicable to a system 2 according to the present invention; in particular, the method is carried out when water treatment system 2 must be set for the operating configuration of regeneration, in order to regenerate the resins contained in said first tank 5. Said method is adapted to be executed by said control system 8 according to the present invention.

The method according to the present invention comprises the following steps:
- comparing a first hardness value of water entering supply line 21 of system 2 with at least one desired hardness value;
- if the first hardness value of the input water is lower than the desired hardness value; system 2 will not be set into the operating configuration of regeneration, i.e. system 2 will not be set for producing the regeneration fluid and/or for supplying regeneration fluid into the first tank 5;
- if the hardness value of the input water is substantially equal to a desired hardness value; system 2 will be set into the operating configuration of regeneration for a first period of time "T1", i.e. system 2 will be set for producing the regeneration fluid and/or for supplying regeneration fluid into the first tank 5 for a first period of time "T1";
- if the hardness value of the input water is higher than a desired hardness value; system 2 will be set into the operating configuration of regeneration for a second period of time "T2", i.e. system 2 will be set for producing the regeneration fluid and/or for supplying regeneration fluid into the first tank 5 for a second period of time "T2".

The method according to the present invention envisages that said first period of time "T1" is shorter than the second period of time "T2".

In one possible embodiment, said control system 8 monitors a second measurement device 25, in particular a sensor adapted to measure the hardness or the resistivity of the water. The first hardness value sensed by the first measurement device is processed by control system 8, which will then compare it with a known hardness value allocated in a storage medium 82 accessible to processing unit 81. Said desired value may be a value in the range of 3÷11°f, e.g. 7°f.

If the first hardness value of the input water is lower than the desired hardness value, system 2 will not be set into the operating configuration of regeneration. On such occasion, control system 8 will control system 2 in such a way that a preset quantity of regeneration fluid, preferably a small quantity thereof, will be supplied into the first tank 5 in order to increase the hardness level of water to be used in said household appliance 1, instead of regenerating the resins. In this manner, when the hardness value is below the desired value, it will be possible to obtain water having a desired hardness in said outlet line 22.

Conversely, if the first hardness value of the input water is substantially equal to or higher than a desired hardness value, then system 2 will be set into the operating configuration of regeneration.

In particular, if the first hardness value of the water entering supply line 21 already corresponds to a hardness level that is lower than a desired value, e.g. lower than the preferred value, e.g. 7°f, or to the value of the above-mentioned range, i.e. 2°f, it will not be necessary to treat any further the water entering system 2 and to be delivered into wash tub 12, thus preventing the resins from softening the water excessively.

In the case wherein the first hardness value of the water entering supply line 21 already corresponds to a hardness value equal to or higher than a desired value, e.g. equal to or higher than the preferred value, e.g. 7°f, or to the value of the above-mentioned range, i.e. 11°f, it will be necessary to treat the water entering system 2. It is thus possible to properly adjust the water hardness value in order to obtain water exiting system 2 and directed towards wash tub 12 which has a second water hardness value that is substantially known and/or constant over time. In this case, it will be appropriate that the resins comprised in the first tank 5 will soften, at least partly, the input water.

The decalcification action exerted by the resins on the water entering the system will have to change as a function of the first hardness value of the water entering system 2 and/or of specific requirements of household appliance 1 in the different operating configurations of the same household appliance 1. In particular, the higher the hardness value of the input water, deviating from at least one desired hardness value, the greater the water treatment action that will have to be exerted, particularly the decalcification action exerted by decalcification system 4.

The present method allows setting system 2 for producing the regeneration fluid and/or for supplying regeneration fluid into said first tank 5, for different periods of time, as a function of the first hardness value of the input water and/or of the requirements of household appliance 1 with which system 2 and/or the control system are associated. In particular, the method according to the present invention envisages that, if said hardness value is close to the desired hardness value, system 2 will be set into the operating configuration of regeneration for a first period of time "T1"; conversely, if said hardness value is higher than the desired value, system 2 will be set into the operating configuration of regeneration for a second period of time "T2". Said second period of time "T2" is longer than the first period of time "T1".

Preferably, said first period of time "T1" and said second period of time "T2" are determined by control system 8 in such a way that they will be at least directly proportional to the first hardness value of the input water. System 2 according to the present invention will thus be set to allow some water to enter the second circuit 43 and/or the second tank 6, so as to be able to generate a preset quantity of regeneration fluid, or to allow some regeneration fluid to enter the first tank 5. The variation in the time for which system 2 will be set to generate a regeneration fluid will cause a variation in the quantity of regeneration fluid that will be supplied into said first tank 5 in order to regenerate the resins.

In this manner, control system 8 is adapted to drive said pump 3, possibly in combination with, or as an alternative to, a valve 31, for a time equal to said first period of time "T1" or equal to said second period of time "T2", for the purpose of varying the production of regeneration fluid and/or the quantity of regeneration fluid supplied into said first tank 5. In a preferred embodiment, control system 8 is adapted to drive said pump 3 and/or said valve 31 for a time equal to said first period of time "T1" or said second period of time "T2", for the purpose of varying the quantity of regeneration fluid delivered towards said first tank 5.

Said first period of time "T1" is in the range of 1 second to 30 seconds. This range of values depends on the construction characteristics of system 2, which must be taken into account and include the characteristics of the circuits, the water pressure, the power of pump 3, etc. Said second period of time "T2" is in the range of 10 seconds and 1 minute. This range of values depends on the construction characteristics of system 2, as previously specified.

The method according to the present invention can be executed at every wash cycle of a dishwasher 1. For some embodiments of water treatment system 2 described so far, the method can be executed during the wash cycle of dishwasher 1, since production of the regeneration fluid occurs in a closed loop. Therefore, the regeneration phase can be carried out in parallel, also during the wash cycle, and regeneration fluid can be supplied into the first tank 5 in order to increase the hardness of the water directed towards said household appliance 1, according to specific requirements.

The method and/or system 2 and/or control system 8 described so far allow obtaining water for a household appliance 1, e.g. a dishwasher, having a preset and/or constant hardness value, independently of the first hardness value of water to be supplied to dishwasher 1 and/or as a function of the requirements of the household appliance in the different operating configurations.

The method and/or the system and/or the control system are therefore adapted to compare the hardness value of water entering a supply line 21 with one or more desired hardness values, directing a variable quantity of water towards said second circuit 43 and/or said second tank 6, and/or directing a variable quantity of regeneration fluid towards said first tank 5, as a function of the deviation between the first hardness value of the input water and a desired hardness value.

The method and/or the system and/or the control system are adapted to vary the time of activation of said pump 3 and/or of said valve 31 through said control system 8, thus changing accordingly the quantity of water directed towards said second circuit 43 and/or said second tank 6, and/or changing accordingly the quantity of regeneration fluid directed towards said first tank 5. Preferably, the method and/or the system and/or the control system are adapted to vary the time of activation of said pump 3, changing accordingly the quantity of regeneration fluid directed towards said first tank 5.

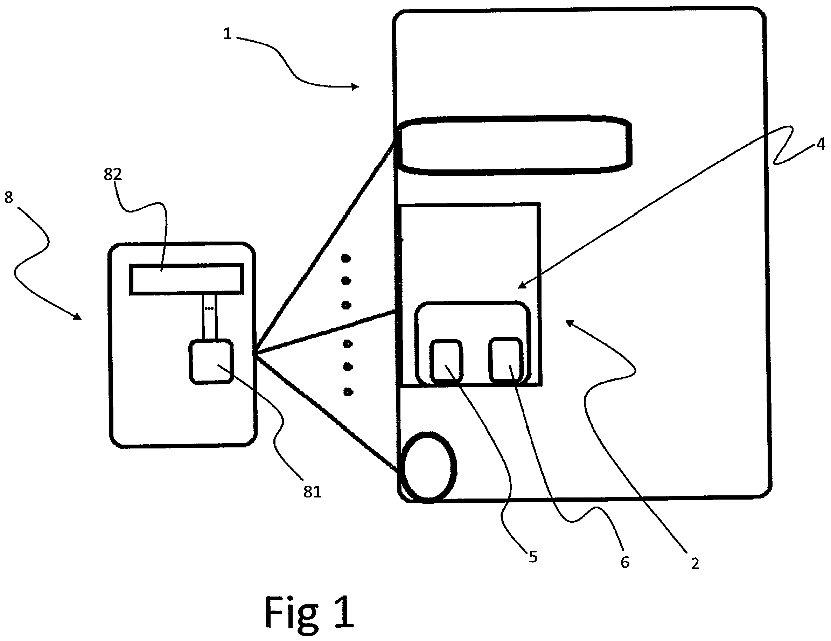

Figure 1 shows a block diagram of control system 8 according to the present invention. As shown in the drawing, control system 8, e.g. implemented on a printed circuit board, comprises at least one storage medium 82 adapted to store, in a non-volatile manner, the data relating to information and/or parameters and/or data about the management and control of water treatment system 2; and at least one processing unit 81, adapted to process the data stored in said storage medium 82 and to manage and control water treatment system 2. Said control system 8 is adapted to control and manage water treatment system 2. Preferably, said control system 8 can also control and drive the devices, circuits and systems of a household appliance 1, e.g. a dishwasher.

Figure 2A shows a first embodiment of system 2 according to the present invention, illustrating the path followed by the water from supply line 21 to outlet line 22. This system 2 is adapted for application to a dishwasher 1. Starting from a first end of the hydraulic circuit shown, a supply valve 13 is visible, which is commonly known as water stop valve, which is adapted to prevent water from being supplied to system 2 according to the present invention. Water treatment system 2 is preferably connected downstream of this valve. Said valve 13 is connected at one end to the water mains, and at the opposite end to said supply line 21. Water treatment system 2 may comprise, along supply line 21, said first measurement device 24 and/or said second measurement device 25, a purification device, in particular an air-break device 23 and an air venting device 26. Control system 8 is preferably electrically connected also to said supply valve 13, said second measurement device 25 and said first measurement device 24. In the illustrated exemplary embodiment, downstream of the purification device there is said decalcification system 4. During the normal use of decalcification system 4 of system 2, the water coming from supply line 21 enters said first circuit 41 and, through said first inlet 51, flows into the first tank 5, in particular into a first chamber 53 containing said resins. The decalcified water exiting the first tank 5 through said outlet 52 flows into outlet line 22 of system 2. Though not shown in the drawing, the water flowing in outlet line 22 is directed towards a household appliance 1, e.g. towards wash tub 12 and/or a sump 11 of a dishwasher, through a pipe or a duct portion. In this embodiment, said control system 8 can drive both said pump 3 and can also drive and/or monitor said supply valve 13; said first measurement device 24 and/or said second measurement device 25, so as to be able to retrieve data useful for the proper operation of system 2. In this embodiment, said pump 3 is arranged along the second circuit 43, the latter being adapted to fluidically connect the second outlet 55 of the first tank 5 to inlet 61 of the second tank 6. In the present embodiment, said inlet 61 of the second tank is located in a bottom part of the same tank 6, in proximity to the base thereof, whereas said outlet 62 is located in a top part of the same tank 6. A duct 45 connects said outlet 62 to said second inlet 54 of the first tank 5. Along said duct 45 there is a non-return valve 46, so that a fluid is only allowed to flow along said duct 45 from the second tank 6 towards said first tank 5.

In Figure 2B a second embodiment of system 2 according to the present invention is visible, which shows the path followed by the water to be decalcified and supplied to a household appliance 1. Upstream of decalcification system 4, this embodiment of system 2 may be substantially similar to the one described and illustrated in Figure 2A, and its operation is substantially the same; in fact, the water coming from supply line 21 enters said first circuit 41 and, through said first inlet 51, flows into the first tank 5. The decalcified water exiting the first tank 5 through said outlet 52 arrives at outlet line 22 of system 2. Unlike the embodiment of Figure 2A, in decalcification system 4 said second circuit 43 is connected to outlet 52 of the first tank 5. Moreover, said pump 3 is arranged along duct 45 that fluidically connects outlet 62 of the second tank 6 to the second inlet 54 of the first tank 5. In the present embodiment, said inlet 61 and said outlet 62 of the second tank 6 are preferably positioned in the bottom part of the same tank 6, near the base thereof. In the present embodiment, inside the second tank 6 there is a quantity of regeneration fluid, which remains in said second tank 6 as long as system 2, and in particular decalcification system 4, stays set for resin regeneration. The presence of a quantity of regeneration fluid in said second tank 6 is due to the fact that the second circuit 43 is fluidically connected to outlet 52 of the first tank 5, thus being able to receive water. Besides, pump 3 is so constructed as to act as a selective shut-off element, preventing the fluid from flowing from the first tank 5 towards said second tank 6, and vice versa, when the same pump 3 is in a deactivated operating configuration. The same Figure 2B provides further constructive details showing how said decalcification system 4 should be designed, in particular how to design said first circuit 41, said first inlet 51, said second inlet 54 and said outlet 52 of the first tank 5, as well as the second circuit 43, inlet 61 and outlet 62 of the second tank 6, and also duct 45. Such constructive details will not be described herein any further, since they can be clearly inferred from the annexed drawings.

Figure 2C shows a third embodiment comprising a valve 31 and an accumulation tank 32.

In this embodiment, system 2 can be constructed, upstream of air break 23, substantially as described and illustrated in Figure 2A. Unlike the other embodiments, within the structure comprising air break 23 and air venting element 26 there is an accumulation tank 32. To said accumulation tank 32, the second circuit 43 of decalcification system 4 is connected. During the normal use of decalcification system 4 of system 2, the water coming from supply line 21 enters said first circuit 41 and, through said first inlet 51, flows into the first tank 5, in particular into a first chamber 53 containing said resins. The decalcified water exiting the first tank 5 through said outlet 52 arrives at supply line 22 of system 2. Although only partially illustrated, the water flowing in outlet line 22 is directed towards a sump 11 and/or towards a household appliance 1, e.g. towards wash tub 12 of a dishwasher 1, through a pipe or a duct portion. In this embodiment, said control system 8 can drive valve 31 and can also drive and/or monitor said supply valve 13; and possibly said first measurement device 24 and/or said second measurement device 25, so as to be able to retrieve data useful for the proper operation of system 2.

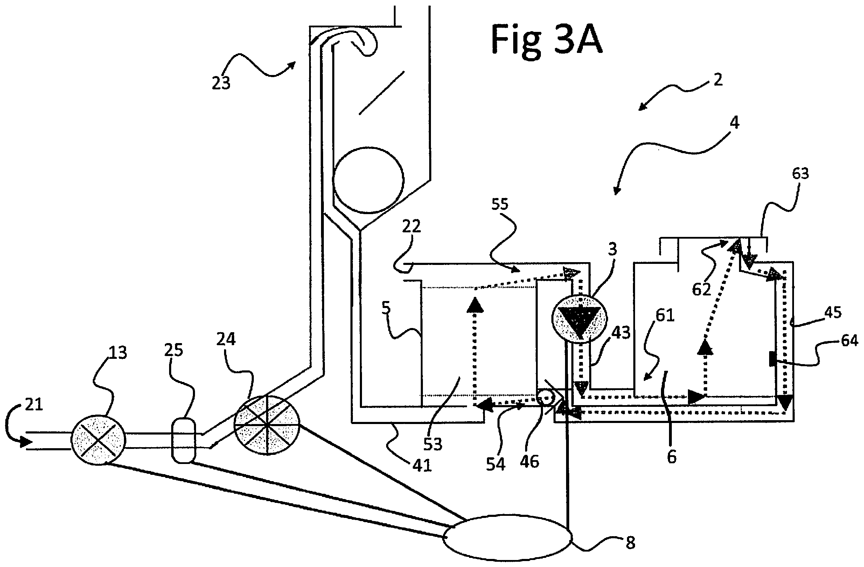

Figure 3A shows system 2 of Figure 2A in a second operating configuration of regeneration, wherein system 2 is set for resin regeneration. This drawing shows the path followed by the water to be used for generating the regeneration fluid for regenerating the resins contained in the first tank 5. In particular, the water contained in the first tank 5 is pumped by pump 3 towards said second circuit 43, so that it can be used for generating the regeneration fluid. The activation of the same pump 3, results in the creation of a closed loop for fluid circulation; in particular, the taking of water from said first tank 5 causes regeneration fluid to be taken from the second tank 6; in particular, the regeneration fluid is pumped/pushed through outlet 62 and delivered, through duct 45, into the first tank 5, thus allowing the regeneration of the resins and/or increasing the hardness of the water directed towards outlet line 22.

The same regeneration fluid, by coming in contact with the saturated resins, will turn back into water. The water thus re-obtained can be pumped again by pump 3 and delivered towards the second circuit 43. The activation of pump 3 thus creates a closed loop for fluid circulation. Therefore, by controlling the time of activation of pump 3 through said control system 8, it is possible to regenerate the resins contained in the first tank 5 in a controlled manner, so that, during the normal use of system 2, and in particular of decalcification system 4, the water flowing in said outlet line 22 will have a desired and/or constant second hardness value, independently of the hardness value of the water entering the system and/or of the different operating phases of household appliance 1.

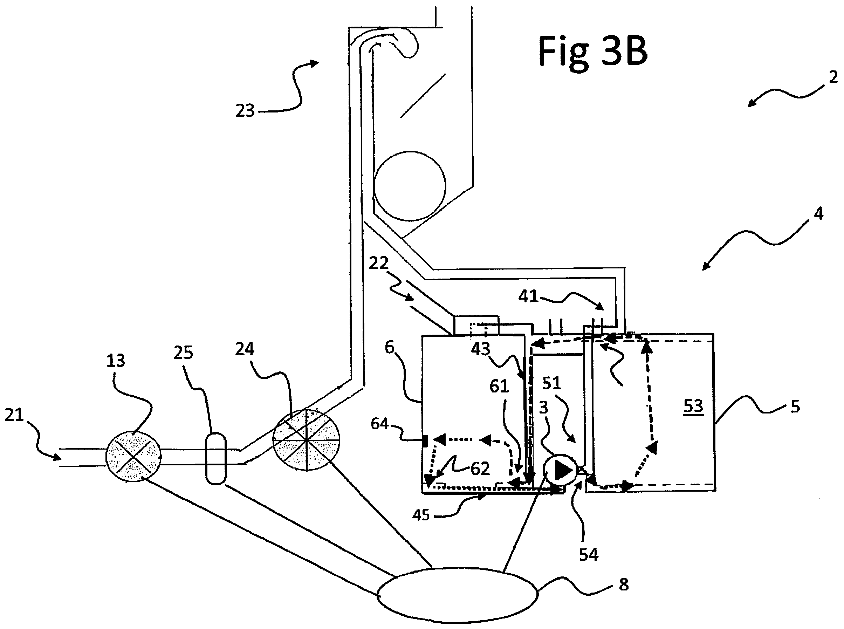

Figure 3B shows system 2 of Figure 2B in a second operating configuration of regeneration, wherein system 2 is set for resin regeneration. This drawing shows the path followed by the water to be used for generating the regeneration fluid for regenerating the resins contained in the first tank 5. In particular, the regeneration fluid contained in the second tank 6, is pumped by pump 3 towards said second inlet 54 of the first tank 5, thus allowing the regeneration of the resins contained in the first tank 5 and/or increasing the hardness of the water directed towards the outlet line 22..

As it comes in contact with the saturated resins, the regeneration fluid turns back into water. The activation of the same pump 3 causes the creation of a closed loop wherein fluid is circulated; in particular, the taking of regeneration fluid from said second tank 6 causes water to be taken from the first tank 5, in particular the water being pumped/pushed through outlet 52 and delivered, through the second circuit 43, into the second tank 6, thus allowing the generation of additional regeneration fluid. In fact, the water coming from the first tank 5, as it comes in contact with the salt, becomes regeneration fluid, which can be pumped again by pump 3 and delivered towards the first tank 5. Thus, the activation of pump 3 creates a closed loop for fluid circulation. Therefore, by controlling the time of activation of pump 3 through said control system 8, it is possible to regenerate the resins contained in the first tank 5 in a controlled manner, so that, during the normal use of system 2, and in particular of decalcification system 4, the water flowing in said outlet line 22 will have a desired and/or constant second hardness value, independently of the hardness value of the water entering the system and/or of the different operating phases of household appliance 1.

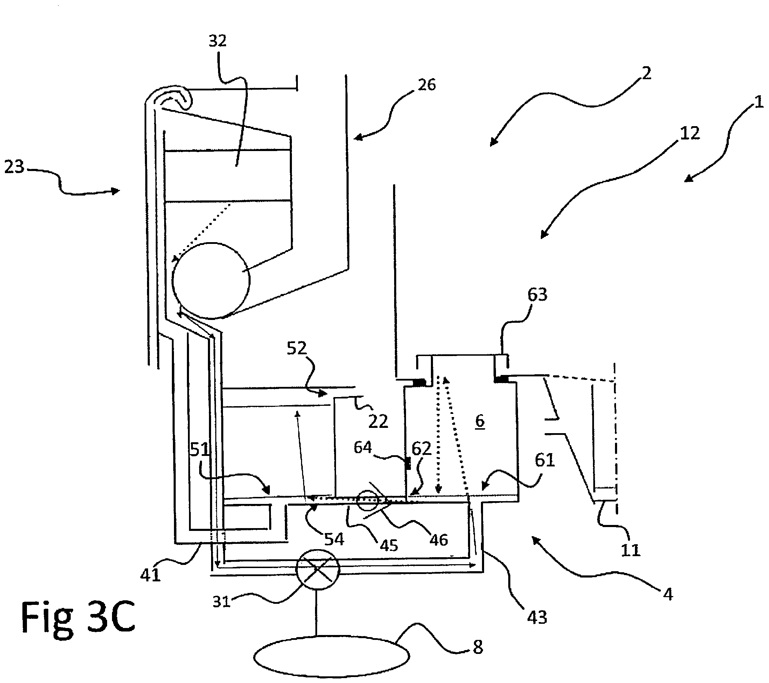

Figure 3C shows system 2 of Figure 2C in a second operating configuration of regeneration, illustrating the path followed by the water to be used for generating the regeneration fluid for regenerating the resins contained in the first tank 5. In particular, the water contained in the accumulation tank 32 is directed, through said second circuit, towards said inlet 61 of the second tank 6 by appropriately controlling said valve 31 via said control system 8. The water supplied into the second tank 6 becomes regeneration fluid that, through outlet 62, flows into the first tank 5 through the second inlet 54. In duct 45 that connects outlet 62 of the second tank 6 to the second inlet 54 of the first tank 5 there is a non-return valve 46.

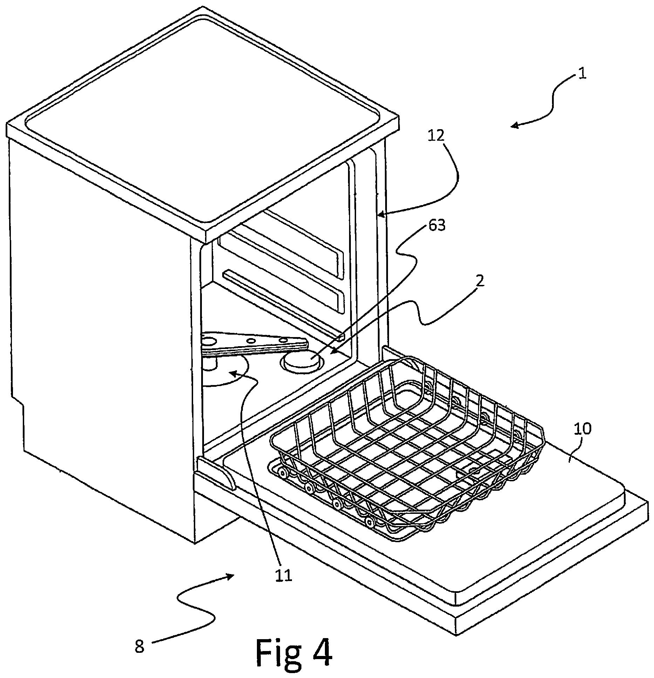

Figure 4 shows a schematic representation of a dishwasher 1. Dishwasher 1 comprises a wash tub 12, in which one or more racks adapted to contain crockery can be positioned, a door 10 adapted to sealingly close said wash tub 12, and a sump 11 for water recovery, as is known to a person skilled in the art. Dishwasher 1 further comprises a control system 8 adapted to control, in addition to said system 2, also other systems and/or devices comprised in dishwasher 1, e.g. the wash pump, door locking systems, etc. The illustrated dishwasher 1 represents one possible exemplary, but non-limiting, embodiment of a household appliance.

Any structural variations of system 2 and/or of dishwasher 1 and/or of the control system 8, which may be obvious to a person skilled in the art in the light of the embodiments described herein and inferable from the annexed drawings, should be considered to be comprised within the scope of the present invention. The inventive concepts described with reference to one embodiment can also be applied to, or combined with, the other embodiments described and/or illustrated herein without however departing from the contents of the present application.

In addition to avoiding the above-mentioned problems, the technical solution shown in Figures 2A, 2B, 3A and 3B also allows for the execution of the resin regeneration phase both during the wash phase and at the end of the wash cycle of dishwasher 1 to which system 2 has been applied, thus providing a considerable reduction in water consumption.

In general, system 2 is controlled by said control system 8 in such a way as to vary the quantity of regeneration fluid used for regenerating the resins according to the desired hardness value of the output water. In fact, by appropriately calculating the hardness value of the input water, it is possible to know when and/or how much such water should be treated in order to obtain a predetermined second hardness value at the exit of system 2, independently of the first hardness value of the water entering the same system 2, or as a function of the requirements of household appliance 1 with which system 2 is associated.

In system 2 according to the present invention, the volume of water to be used for producing the regeneration fluid is defined by the time of operation of at least one electromechanical actuator, whether this occurs in open-loop or closed-loop mode. The present solutions therefore allows simplifying the hardware structure of the system, thus reducing the costs, while ensuring a high quality level thanks to the automatic management provided by the management software executed by said control system 8. Moreover, the use of a closed loop for resin regeneration ensures a more uniform level of regeneration of the resins, even when only a partial regeneration of the resins is required. Such a solution also allows supplying a small quantity of regeneration fluid into the first tank 5 in order to increase the hardness of the water directed towards outlet line 22, according to specific requirements.

Control system 8 according to the present invention, which can be implemented as a main board of a household appliance 1, e.g. a dishwasher, can control water treatment system 2 in such a way that different operating range values are associated with the different water hardness values to be used in the dishwasher, based on which values it will be necessary to carry out a resin regeneration procedure.

The operating range values stored in storage medium 82 of control system 8 may change as a function of the usage condition of the resins, in particular, one of the operating range values considers the resins as still unused, i.e. new. This setting is used at the time of installation of the system and/or of household appliance 1, until the first resin regeneration procedure.

Also, said control system 8 can control said water treatment system 2 in such a way as to control the water hardness, since it can vary the hardness of the water exiting system 2, in particular by controlling an electromechanical device in such a way that a quantity of regeneration fluid can be supplied into said first tank 5 in order to carry out a controlled regeneration of the resins. In the embodiment wherein said electromechanical device is a pump 3, it is possible to carry out the resin regeneration process in a closed loop, thereby reducing the water consumption of the system and of household appliance 1 as a whole.

Control system 8 according to the present invention, which can be implemented as a main board of household appliance 1, allows defining the operating range of water treatment system 2 by means of at least two, e.g. three, different settings, corresponding to different configurations of water treatment system 2 and/or of household appliance 1. In particular, in addition to the setting that considers the resins as still unused, one of the settings considers the resins as having already undergone at least one regeneration process; and a further setting takes into account the fact that a salt presence sensor 64 in the second tank 6 is detecting a low salt level.

Water treatment system 2, appropriately controlled by control system 8, allows changing the hardness of the water to be supplied to a household appliance 1, e.g. into wash tub 12 of a dishwasher, by supplying a controlled and predetermined quantity of regeneration fluid into the first tank 5 through appropriate control of an electromechanical device, e.g. a pump 3 and/or a valve 31. The activation of the electromechanical device is defined according to the variation, e.g. an increase in hardness, that must be obtained in the hardness of the water to be supplied to household appliance 1. The present solution allows avoiding the additional cost of the mixing valve used in the prior art.

In a preferred embodiment of the present invention, control system 8 can compute the supply of regeneration fluid into the first tank 5, changing the threshold values set in household appliance 1 accordingly, as a function of the different operating configurations of household appliance 1 itself. With the present solution, if the water entering system 2 has a low hardness level, the computation made by control system 8 may considerably postpone the execution of a complete resin regeneration procedure, thus reducing the water consumption of household appliance 1.

The present invention can adapt water treatment system 2 as a function of the operating range of the resins and/or of the condition of system 2 itself, e.g. as a function of the salt level in the second tank 6.

In addition to reducing the water consumption of household appliance 1, the present invention also allows obtaining the desired hardness value at the exit of system 2 according to specific requirements, independently of the hardness of the water entering system 2.

The present invention provides greater technical advantages compared to the solutions currently known in the art, thus considerably reducing the implementation cost.

**REFERENCE NUMERALS**

| | |
|---|---|
| Household appliance | 1 |
| Door | 10 |
| Sump | 11 |
| Wash tub | 12 |
| Supply valve | 13 |
| Water treatment system | 2 |
| Supply line | 21 |
| Outlet line | 22 |
| Air break | 23 |
| First measurement device | 24 |
| Second measurement device | 25 |
| Air venting element | 26 |
| Pump | 3 |
| Valve | 31 |
| Accumulation tank | 32 |
| Decalcification system | 4 |
| First circuit | 41 |
| Second circuit | 43 |
| Duct | 45 |
| Non-return valve | 46 |
| First tank | 5 |
| Inlet | 51 |
| Outlet | 52 |
| First chamber | 53 |
| Second inlet | 54 |
| Second outlet | 55 |
| Second tank | 6 |
| Inlet | 61 |
| Outlet | 62 |
| Cap | 63 |
| Sensor | 64 |
| Control system | 8 |
| Processing unit | 81 |
| Storage medium | 82 |

## Claims

1. Control system (8) for a household appliance (1), such as, for example, a dishwasher, said control system (8) being at least adapted to control a water treatment system (2), the latter comprising ion-exchange resins;
said control system (8) being adapted to establish different hardness levels of water to be used in said household appliance (1) and, for each established hardness level, when it is necessary to carry out a procedure for regenerating the resins of said system (2);
said control system (8) comprising:
- at least one storage medium (82) containing information and data about the management and control of the water treatment system (2);
- at least one processing unit (81) adapted to process the data contained in said storage medium (82), for the purpose of appropriately controlling the water treatment system (2) so as to be able to change the hardness of the water to be used in said household appliance (1) and conveniently request the execution of a procedure for regenerating the resins of said system (2);
said storage medium (82) is adapted to allocate memory for at least two threshold values for each hardness level established by the control system (8);
said at least two threshold values corresponding to as many water quantities to be supplied to the system (2), whereupon it is necessary to supply a suitable quantity of a regeneration liquid or fluid in contact with said resins of said water treatment system (2).

2. Control system according to claim 1, wherein a first threshold value is such to be implemented by the control system (8) upon a first use of the water treatment system (2) .

3. Control system according to claim 2, wherein a second threshold value is such to be implemented by the control system (8) after the supply of an appropriate quantity of a regeneration liquid for the execution of a first procedure for regenerating the ion-exchange resins of said water treatment system (2).

4. Control system according to claim 2 or 3, wherein a third threshold value is such to be implemented by the control system (8) when:
- a first procedure for regenerating the ion-exchange resins of said system (2) has been carried out; and
- said control system (8) detects the activation of a salt presence sensor (64) in a salt tank (6) adapted to contain salts.

5. Control system according to claims 2, 3 or 4, wherein a fourth threshold value is such to be implemented by the control system (8) when: it is necessary to reach a hardness level predetermined by the control system (8) for the water to be used in said household appliance (1).

6. Control system according to any one of the preceding claims, wherein the control system (8) is adapted to control the water treatment system (2) in a manner such that a predetermined quantity of regeneration fluid, preferably a small quantity, is placed in contact with said resins for the purpose of increasing the hardness level of water to be used in said household appliance (1).

7. Water treatment system (2) for a household appliance (1); comprising:
• a supply line (21), through which water is supplied into the system (2), which water has a predetermined first hardness level;
• a decalcification system (4), in turn comprising:
• at least one first tank (5) adapted for containing ion-exchange resins;
• at least one second tank (6) adapted for containing salts;
• a first circuit (41) adapted for conducting water coming from the supply line (21) towards an inlet of said first tank (5);
• a second circuit (43) adapted for conducting water towards an inlet of said second tank (6);
said system (2) further comprising:
• an outlet line (22), connected to an outlet (52) of the first tank (5), through which water having a second hardness level flows out of the system (2);
• an electromechanical actuator (3, 31) adapted to define, at least partly, the quantity of water per time unit supplied into said second circuit and/or into said second tank (6);
the system (2) being adapted to be controlled by said control system (8), which is adapted to:
- control said at least one electromechanical actuator;
- establish different hardness levels of water to be used in said household appliance (1);
- automatically determine, for each established hardness level, a time of activation of said electromechanical actuator (3, 31), for the purpose of obtaining water flowing in said outlet line (22) which has a preset and/or constant second hardness level, independently of said first hardness level of the water entering the system (2);
**characterized in that** said control system (8) is a control system (8) according to any one of the preceding claims.

8. Water treatment system according to claim 7, wherein, in an operating configuration of regeneration of the system (2), the control system (8) is adapted to, as a function of said first water hardness level:
- automatically determine the instant of activation of said electromechanical actuator (3, 31); and
- activate said electromechanical actuator (3, 31) for the previously determined time in order to vary the quantity of water directed towards said second circuit (43) and/or said second tank (6).

9. Water treatment system according to claim 7 or 8, wherein said electromechanical device is a pump (3), wherein the quantity of water directed towards said second circuit (43) and/or said second tank (6) is proportional to the time of activation of the same pump (3).

10. Water treatment system according to any one of the preceding claims, wherein said pump (3) is arranged along a communication circuit (43) or duct (45) between said first tank (5) and the second tank (6).

11. Water treatment system according to claim 10, wherein said pump (3) is arranged along a duct (45) that connects an outlet (62) of the second tank (6) to a second inlet (54) of the first tank (5).

12. Dishwasher (1) comprising: a wash tub (12), a door (10), a sump (11) and at least one supply valve (13);
**characterized in that** it comprises a control system (8) according to any one of claims 1 to 6.

13. Dishwasher (1) according to claim 11, comprising a water treatment system (2) according to any one of claims 7 to 11.

14. Computer program adapted to be stored in a storage medium (82) comprised in a control system (8) for a household appliance (1) according to claim 1;
said program being adapted to be executed by a processing unit (81);
said program providing for the execution of the following steps:
- setting a first threshold value corresponding to a first quantity of water to be supplied into a water treatment system (2);
- executing work cycles of the household appliance (1) until said first quantity of water has been supplied into the water treatment system (2), thus exceeding said first threshold value;
- executing a regeneration procedure in the water treatment system (2);
- setting a second threshold value corresponding to a second quantity of water to be supplied into the water treatment system (2); wherein said second threshold value is lower than said first threshold value;
- executing work cycles of the household appliance (1) until said second quantity of water has been supplied into the water treatment system (2), thus exceeding said second threshold value.

15. Program according to claim 14, wherein if, after a step of executing work cycles of the household appliance (1) until said second quantity of water has been supplied into the water treatment system (2), thus exceeding said first threshold value, said control system (8) detects the activation of a salt presence sensor (64), the following steps will be carried out:
- setting a third threshold value corresponding to a third quantity of water to be supplied into the water treatment system (2); wherein said third threshold value is lower than both said first threshold value and said second threshold value;
- executing work cycles of the household appliance (1) until said third quantity of water has been supplied into the water treatment system (2), thus exceeding said third threshold value;
- if said control system (8) detects the deactivation of the salt presence sensor (64), the following steps will be carried out:
- setting a second threshold value corresponding to a second quantity of water to be supplied into the water treatment system (2);
- executing work cycles of the household appliance (1) until said second quantity of water has been supplied into the water treatment system (2), thus exceeding said second threshold value.

16. Method for controlling a water treatment system (2) for the generation of a regeneration fluid, comprising the following steps:
• comparing a first hardness level of water entering a supply line (21) of the water treatment system (2) with at least one desired hardness level;
• if the first hardness level of the input water is lower than the desired hardness level; the system (2) will not be set for producing the regeneration fluid;
• if the first hardness level of the input water is substantially equal to a desired hardness level; the system (2) will be set for producing the regeneration fluid for a first period of time "T1";
• if the first hardness level of the input water is higher than a desired hardness level; the system (2) will be set for producing the regeneration fluid for a second period of time "T2";
wherein said first period of time "T1" is shorter than the second period of time "T2";
said first period of time "T1" and said second period of time "T2" are at least directly proportional to the first hardness level of the input water;
**characterized in that** said method is applied to a water treatment system (2) according to any one of claims 7-11, and/or is implemented by a control system (8) according to any one of claims 1-6.
